(19) Europäisches Patentamt
European Patent Office
Office européen des brevets

(11) **EP 2 271 961 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **09737854.1**

(22) Anmeldetag: **25.04.2009**

(51) Int Cl.:
*G02B 21/16* (2006.01)    *G01N 21/27* (2006.01)

(86) Internationale Anmeldenummer:
**PCT/EP2009/003035**

(87) Internationale Veröffentlichungsnummer:
**WO 2009/132810 (05.11.2009 Gazette 2009/45)**

(54) **VERFAHREN ZUM KALIBRIEREN EINER ABLENKEINHEIT IN EINEM TIRF-MIKROSKOP, TIRF-MIKROSKOP UND VERFAHREN ZU DESSEN BETRIEB**

METHOD FOR CALIBRATING A DEFLECTION UNIT IN A TIRF MICROSCOPE, TIRF MICROSCOPE, AND METHOD FOR THE OPERATION THEREOF

PROCÉDÉ POUR ÉTALONNER UNE UNITÉ DE DÉVIATION DANS UN MICROSCOPE TIRF, MICROSCOPE TIRF ET PROCÉDÉ POUR LE FAIRE FONCTIONNER

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.04.2008 DE 102008021577**

(43) Veröffentlichungstag der Anmeldung:
**12.01.2011 Patentblatt 2011/02**

(73) Patentinhaber: **Carl Zeiss Microscopy GmbH 07745 Jena (DE)**

(72) Erfinder: **GONSCHOR, Mattias 37130 Gleichen (DE)**

(74) Vertreter: **Schiffer, Axel Martin et al Weber & Heim Patentanwälte Partnerschaftsgesellschaft mbB Irmgardstrasse 3 81479 München (DE)**

(56) Entgegenhaltungen:
EP-A1- 1 524 491    WO-A1-2006/048683
DE-A1-102006 021 996    US-A1- 2004 001 253

- **ROHRBACH A: "Observing Secretory Granules with a Multiangle Evanscent Wave Microscope" BIOPHYSICAL JOURNAL, NEW YORK, US, US, Bd. 78, Nr. 5, 1. Mai 2000 (2000-05-01), Seiten 2641-2654, XP002315573 ISSN: 0006-3495**
- **AXELROD D ET AL: "TOTAL INTERNAL REFLECTION FLUORESCENCE" ANNUAL REVIEW OF BIOPHYSICS AND BIOENGINEERING, ANNUAL REVIEWS INC., PALO ALTO, CA, US, Bd. 13, 1. Januar 1984 (1984-01-01), Seiten 247-268, XP009046174 ISSN: 0883-9182**
- **OHEIM M ET AL: "Non-linear evanescent-field imaging" JOURNAL OF PHYSICS D. APPLIED PHYSICS, IOP PUBLISHING, BRISTOL, GB, Bd. 38, 1. Januar 2005 (2005-01-01), Seiten R185-R197, XP007909441 ISSN: 0022-3727**
- **BO HUANG ET AL: "Surface Plasmon Resonance Imaging Using a High Numerical Aperture Microscope Objective" ANALYTICAL CHEMISTRY, AMERICAN CHEMICAL SOCIETY. COLUMBUS, US, Bd. 79, Nr. 7, 1. April 2007 (2007-04-01), Seiten 2979-2983, XP007909440 ISSN: 0003-2700**

**Beschreibung**

Die Erfindung bezieht sich in einem ersten Aspekt auf ein Verfahren zum Kalibrieren einer Ablenkeinheit in einem TIRF-Mikroskop.

In einem zweiten Gesichtspunkt betrifft die Erfindung ein TIRF-Mikroskop.

In einem weiteren Aspekt bezieht sich die Erfindung auf ein Verfahren zum Betrieb eines TIRF-Mikroskops.

Bei der TIRF-Mikroskopie ist es wichtig, den Winkel, unter dem die Probe beleuchtet wird, genau bestimmen zu können. Mit Hilfe dieses Einfallswinkels können weitere Parameter des sich an der Grenzfläche zwischen Deckglas und Probe bildenden evaneszenten Feldes sowie der Probe, wie zum Beispiel Eindringtiefe, Brechungsindex und Grenzwinkel der Totalreflexion, bestimmt werden.

Der Einfallswinkel wird in der Regel über eine motorisch angetriebene Ablenkeinheit eingestellt und durch die mechanisch-optischen Fertigungstoleranzen der verwendeten Mikroskopkomponenten wie zum Beispiel Filtersatz oder Objektiv beeinflusst. Deshalb ist für jede Kombination von Bauteilen mit unterschiedlichen mechanischen Abmessungen eine Kalibrierung der Ablenkeinheit notwendig.

DE 10 2006 021 996 A1 beschreibt ein Mikroskop zur totalinternen Reflexions-Mikroskopie, wobei sowohl Beleuchtungslicht als auch Detektionslicht über den Beleuchtungsstrahlengang durch das Objektiv geführt werden und wobei an der Grenzfläche zu einer Probe oder Probenabdeckung vorzugsweise total reflektiertes Beleuchtungslicht in den Beleuchtungsstrahlengang zurückkehrt. Dieses Reflexionslicht wird aus dem Beleuchtungsstrahlengang ausgekoppelt und mit einem ortsauflösenden Detektor aufgenommen. Aus dem detektierten Reflexionslicht werden Parameter des evaneszenten Feldes berechnet.

Der Hardwareaufwand für das dort beschriebene Verfahren ist erheblich. Neben einer aufwändigen Optik zur Auskopplung des Reflexionslichts aus dem Beleuchtungsstrahlengang verwendet das in DE 10 2006 021 996 A1 angegebene Verfahren lediglich total reflektiertes Licht, welches demgemäß keine probenspezifischen, sondern nur systemspezifische Informationen trägt. Dies ist problematisch, da insbesondere der Winkel für die Totalreflexion und weitere Parameter des evaneszenten Felds vom Brechungsindex der verwendeten Probe abhängen.

Ein gattungsgemäßes TIRF-Mikroskop ist zudem in DE 10 2006 021 996 A1 beschrieben. Weitere TIRF-Mikroskope und TIRF-Verfahren sind aus US 2004/0001253 A1, WO 2006/048683 A1, "Observing Secretory Granules with a Multiangle Evanescent Wave Microscope", Biophysical Journal, Vol. 78, May 200, 2641-2654 von A. Rohrbach, "Total internal reflection fluorescence", Ann. Rev. Biophys. Bioeng. 1984, 13:247-68 von D. Axelrod et al., "Surface Plasmon Resonance Imaging Using a High Numerical Aperture Microscope Objective", Anal. Chem.. 2007, 79, 2979-2983 von Bo Huang et al. und "Non-linear evanescent-field imaging", J. Phys. D: Appl. Phys. 38 (2005) R185-R197 von M. Oheim et al. bekannt. Außerdem ist in EP 1 524 491 A1 eine Vorrichtung mit einem Mikroskop beschrieben.

**Aufgabe** der Erfindung ist es, ein Verfahren anzugeben und ein TIRF-Mikroskop zu schaffen, mit welchen eine Ablenkeinheit in einem TIRF-Mikroskop im Vergleich zum Stand der Technik genauer kalibriert werden kann und weitere wesentliche Parameter des evaneszenten Feldes in einer Probe bestimmt werden können.

Diese Aufgabe wird durch das Verfahren mit den Merkmalen des Anspruchs 1 und durch das TIRF-Mikroskop mit den Merkmalen des Anspruchs 14 gelöst. Gegenstand der Erfindung ist außerdem ein Verfahren zum Betreiben eines TIRF-Mikroskops nach Anspruch 18.

Vorteilhafte Varianten des erfindungsgemäßen Verfahrens und bevorzugte Ausgestaltungen des erfindungsgemäßen TIRF-Mikroskops sind Gegenstand der abhängigen Ansprüche.

Bei dem erfindungsgemäßen Verfahren zum Kalibrieren einer Ablenkeinheit in einen TIRF-Mikroskop, mit welcher ein Einfallswinkel von Anregungslicht auf eine Probe verstellt wird, wird eine Einstellung der Ablenkeinheit so gewählt, däss der zugehörige Einfallswinkel sicher größer oder sicher kleiner ist als ein erwarteter Grenzwinkel für die Totalreflexion des Anregungslichts an einer Oberfläche einer verwendeten Probe. Sodann wird der Einfallwinkel durch Ändern der Einstellung der Ablenkeinheit in Richtung eines erwarteten Grenzwinkels gescannt, wobei zu jeder Einstellung der Ablenkeinheit eine Intensität eines durch das Anregungslicht bewirkten optischen Response der verwendeten Probe gemessen. Die Intensität des optischen Response der verwendeten Probe wird mindestens für so viele Einstellungen der Ablenkeinheit gemessen, bis die Intensität des optischen Response der verwendeten Probe eine Flanke durchläuft und die zu der Flanke gehörende Einstellung der Ablenkeinheit wird als Einstellung für den Grenzwinkel der Totalreflexion an der verwendeten Probe gespeichert.

Als Anregungslicht wird in aller Regel eine Laserquelle verwendet. Es können aber auch andere Arten von Anregungslicht, wie z.B. konventionelle Quecksilberbogenlampen Verwendung finden.

Unter dem Begriff Einstellung der Ablenkeinheit kann eine Winkeleinstellung oder aber auch eine andere Einstellmöglichkeit wie z.B. eine laterale Ablenkeinstellung verstanden werden.

Die Intensitätsmessung kann in einer bevorzugten Variante der Erfindung integral über die Objektivpupille oder einer dazu konjugierten Ebene erfolgen. Unter der Objektivpupille wird hier die der Probe abgewandte Fokalebene des Objektivs verstanden.

In einer bevorzugten Variante der Erfindung wird zum Scannen des Einfallswinkels des Anregungslichts die Einstellung der Ablenkeinheit automatisch so verändert, dass sich der Fokus des Anregungslichts einmal quer über die gesamte Objektivpupille bewegt. In dieser Variante wird das Anregungslicht auf einen Punkt in der Objektivpupille fokussiert. Da dies die der Probe abgewandte Fokalebene des Objektivs ist, wird das Strahlenbündel, welches in diesem Punkt zusammenläuft, probenseitig in paralleles Licht abgebildet, welches die Probe unter einem bestimmten, für alle Strahlen identischen Einfallswinkel trifft. Der Ort des Fokus des Anregungslichts beziehungsweise des Anregungsstrahlenbündels in der Objektivpupille bestimmt also den Winkel, unter dem die Probe beleuchtet wird. Wird der Punkt in der Objektivpupille mittig quer über die Objektivpupille gescannt, so ändert sich der Einfallswinkel des Anregungslichts von einem großen positiven Einfallswinkel über senkrechten Einfall bis hin zu einem großen negativen Einfallswinkel.

Im Fall von punktförmiger Pupillenbeleuchtung treffen alle Strahlen des parallelen Strahlenbündels unter demselben räumlichen Winkel auf die Probe.

Im Fall einer kreisringförmigen Pupillenbeleuchtung, bei der jeder Strahl einen identischen Abstand von der zentralen optischen Achse besitzt, trifft jeder Strahl zwar ebenfalls unter demselben Winkel relativ zur Probe auf die Probe. Die auf die Probe einfallenden Einzelstrahlen sind aber nicht parallel zueinander. Das Strahlenbündel weist allerdings eine Zylindersymmetrie auf.

Ein wesentlicher Vorteil des erfindungsgemäßen Verfahrens ist, dass das Original-TIRF-Objektiv und der Original-Anregungsfiltersatz verwendet werden können.

Weiterhin kann zum Kalibrieren die verwendete biologische Probe selbst verwendet werden. Es ist kein spezielles Testpräparat notwendig. Darüber hinaus muss der Brechungsindex der Probe nicht bekannt sein.

Weiterhin ist vorteilhaft, dass die Auswertung sehr robust ist. Es können sowohl das gesamte Kamerabild als auch Teile des Pupillenbilds ausgewertet werden.

Ein weiterer Vorteil des erfindungsgemäßen Verfahrens ist, dass sich das System selbst kalibrieren kann. Im Gegensatz zum Verfahren in Druckschrift DE 10 2006 021 996 A1 wird kein kalibriertes Detektorelement benötigt.

Das erfindungsgemäße TIRF-Mikroskop zur Durchführung des erfindungsgemäßen Verfahrens weist folgende Komponenten auf: eine Lichtquelle zum Aussenden des Anregungslichts, eine Mikroskop-Optik zum Leiten des Anregungslichts auf die verwendete Probe, die Ablenkeinheit zum Einstellen des Einfallswinkels des Anregungslichts auf die Oberfläche der verwendeten Probe und einen Detektor zum Nachweisen des optischen Response der verwendeten Probe. Als Detektor können ein Kamerachip, z.B. ein CCD, ein Photomultiplier, ein PSD, Photodioden oder ähnliche Nachweisgeräte für Licht eingesetzt werden.

Bei den Vorarbeiten, die zur Erfindung führten, wurde erkannt, dass eine Kalibrierung eines TIRF-Mikroskops, welche direkt das von einer Probe emittierte Licht und nicht das von der Optik reflektierte Licht benutzt, deutliche Vorteile besitzt.

Als ein Kerngedanke der Erfindung kann deshalb angesehen werden, zur Kalibrierung eines TIRF-Mikroskops die von der Probe selbst emittierte Intensität zu benutzen. Hierdurch können die Parameter des evaneszenten Feldes wesentlich genauer als bisher ermittelt werden.

Darüber hinaus erfordert die erfindungsgemäße Lösung nur einen sehr geringen zusätzlichen Hardwareaufwand. Bei besonders vorteilhaften Varianten wird nur eine Hilfslinse benötigt, um die Erfindung zu realisieren.

Erfindungsgemäß wird ausgenutzt, dass bei Erreichen und Überschreiten des Grenzwinkels der Totalreflexion die Eindringtiefe des Anregungslichts in die Probe rapide abnimmt und dann nur wenige 10 bis 100 nm beträgt. Dies hat zur Folge, dass die Hintergrundfluoreszenz aus Probenteilen, die vom Deckglas weiter entfernt sind, schnell abfällt.

Unter optischen Response soll eine Reaktion der verwendeten Probe auf eine externe Anregung durch Licht verstanden werden. Das Anregungslicht soll hierbei nicht auf sichtbares Licht beschränkt sein, es kann insbesondere auch infrarotes und ultraviolettes Licht gemeint sein. Die Reaktion der verwendeten Probe auf eine solche Anregung kann ebenfalls vielfältig sein. Das Anregungslicht kann entweder gestreut oder aber absorbiert und daraufhin wieder emittiert werden. Hierbei soll unter optischen Response jegliche Art von Lumineszenzstrahlung, insbesondere Fluoreszenzstrahlung, verstanden werden. Generell soll unter optischen Response jegliche Strahlungsreaktion der Probe auf eine Lichtanregung verstanden werden.

Zur Kalibrierung der Ablenkeinheit stellt man diese so ein, dass der zugehörige Einfallswinkel sicher größer oder kleiner ist als ein erwarteter Grenzwinkel für die Totalreflexion. Danach wird der Einfallswinkel in Richtung eines erwarteten Grenzwinkels gescannt und gleichzeitig die von der Probe abgestrahlte Intensität gemessen. Die sodann durchlaufene Flanke wird gemessen und ausgewertet. Dasselbe Verfahren wird bei punktueller Pupillenbeleuchtung des TIRF-Objektives für den zweiten Grenzwinkel der Totalreflexion, der sich vom ersten Grenzwinkel der Totalreflexion nur durch sein Vorzeichen unterscheidet, durchgeführt. Aus den Flanken des winkelabhängigen Intensitätsverlaufes und den dazugehörigen Einstellungen der Ablenkeinheit lässt sich dann die Nullpunktseinstellung der Ablenkeinheit, auch Winkeloffset genannt, ermitteln.

Damit ist es möglich, die Ablenkeinheit absolut zu kalibrieren. Denn die konstruktionsbedingte Übertragungsfunktion, die den Einfallswinkel in Abhängigkeit von der Einstellung der Ablenkeinheit angibt, ist bekannt. Eine Kenntnis über den Brechungsindex der Probe ist hier nicht nötig.

Bei Systemen, die eine kreisringförmige Objektivpupillenbeleuchtung verwenden, steht nur eine Intensitätsflanke zur Verfügung. Hierbei ist es für eine absolute Skalenkalibrierung notwendig, den Brechungsindex der Probe zu kennen. Dies kann zum Beispiel mit Hilfe eines Kalibrierpräparats mit bekanntem Brechungsindex geschehen. Bei dieser Anordnung kann demgemäß zum Kalibrieren nicht die zu untersuchende Probe verwendet werden kann, da der Brechungsindex der Probe im Allgemeinen unbekannt ist.

Für den Grenzwinkel der Totalreflexion ergibt sich folgende Beziehung:

$$n_p = n_d \sin \alpha_T .$$

Nach der Kalibrierung der Ablenkeinheit kann mit Kenntnis der Brechungsindizes der Probe und des Deckglases im Falle von Totalreflexion die Eindringtiefe d des evaneszenten Felds anhand des Einfallswinkels $\alpha$ gemäß folgender Beziehung:

$$d = \frac{\lambda}{4\pi \cdot n_d \sqrt{\sin^2 \alpha - \sin^2 \alpha_T}} ,$$

eingestellt werden. Unter der Eindringtiefe d wird ausgehend von der Grenzfläche zwischen Probe und Deckglas die Länge in Richtung der optischen Achse verstanden, bei der die Intensität des evaneszenten Felds in der Probe auf den e-ten Teil entsprechend einem Wert von ungefähr 0,37 der Intensität des Lichtfelds an der Grenzfläche abgeklungen ist.

Bei einer bevorzugten Variante des erfindungsgemäßen Verfahrens wird der optische Response der verwendeten Probe in einer zur Ebene einer Objektivpupille konjugierten Ebene gemessen. Da die Objektivpupille eine gemeinsame Durchtrittsfläche für alle Lichtkegel der optischen Abbildung ist, eignet sich die Objektivpupille besonders gut dafür, den optischen Response der Probe zu messen. Äquivalent hierzu ist eine Messung des optischen Response in einer zur Objektivpupille konjugierten Ebene.

Besonders bevorzugt wird der optische Response mit einem Detektor, insbesondere mit einer Kamera gemessen. Besonders vorteilhaft kann dabei die Kamera benutzt werden, welche beim TIRF-Messbetrieb verwendet wird. Beim Wechsel von Mess- zu Kalibrier-Betrieb und umgekehrt ist dann kein Austausch der Kamera notwendig.

Bei einer weiteren bevorzugten Variante werden zur Auswertung der Intensität nur Teilbereiche eines Kameradetektors benutzt. Hierbei kann zum Beispiel die Objektivpupille durch eine Abbildungsoptik auf dem Kameradetektor abgebildet werden und durch eine spezielle softwaregesteuerte Auslesetechnik können nur Teilbereiche des Kameradetektors zur Auswertung herangezogen werden.

Besonders bevorzugt ist es hierbei, einen Kreisausschnitt auszuwerten, welcher nur leicht größer ist als das Bild der ebenfalls kreisförmigen Objektivpupille. Es können aber auch kreisförmige Ausschnitte des Objektivpupillenbilds oder rechteckige Ausschnitte, die einen Halbkreis des Objektivpupillenbilds umfassen, verwendet werden.

Besonders vorteilhaft an diesem Verfahren ist es, dass das Signal zu Rauschverhältnis und die Messgeschwindigkeit durch eine selektive Auswertung des Kameradetektors stark verbessert werden kann. Die in einem solchen Kamerabild verwendeten Ausschnitte zur Auswertung werden auch "Regions Of Interest" genannt.

Ferner ist es bevorzugt, dass zur Beschleunigung der Kalibrierung der Einfallswinkel nur in einer Umgebung der erwarteten Grenzwinkel oder eines erwarteten Grenzwinkels gescannt wird. Da die Nutipunkteinstellung $\beta_0$ der Ablenkeinheit, welche einem Einfallswinkel von 0° entspricht, in der Praxis einen durch die Einzelteiltoleranzen vorgegebenen Höchstwert $\beta_{0max}$ nicht überschreitet, sind die Positionen der erwarteten Grenzwinkel der Totalreflexion in einem gewissen Rahmen bereits bekannt. Insofern kann der Scan gleich in einer Umgebung eines erwarteten Grenzwinkels gestartet werden. Dies führt vorteilhafterweise zu einer erheblichen Beschleunigung des Kalibrierverfahrens.

Eine weitere Beschleunigung kann dadurch erreicht werden, dass die Kamera mit einer reduzierten Auflösung betrieben wird. Dies wird in der Regel durch eine Zusammenschaltung von Intensitäten benachbarter Bildelemente, dem sogenannten Binning, erreicht. Die Bildauflösung wird hierbei entsprechend der Anzahl der zusammengefassten Pixel reduziert. Dies führt dazu, dass beim Scannen schneller zum nächsten Messpunkt verfahren werden kann. Ein weiterer Vorteil liegt darin, dass bei reduzierter Auflösung die Kameraempfindlichkeit steigt und somit weniger Beleuchtungslicht für die Probenbeleuchtung verwendet werden kann. Dies schont die Probe.

Dieses Verfahren ist sowohl zur Systemkalibrierung als auch zur Bestimmung des Berechnungsindexes für eine Reihe unterschiedlicher Proben geeignet.

In einer weiteren besonders bevorzugten Variante werden für eine punktförmige Pupillenbeleuchtung eine erste Einstellung $\beta_1$ der Ablenkeinheit für einen positiven Grenzwinkel für die Totalreflexion und eine zweite Einstellung $\beta_2$ der Ablenkeinheit für einen negativen Grenzwinkel für die Totalreflexion bestimmt und als Einstellung $\beta_0$ der Ablenkeinheit für senkrechten Einfall des Anregungslichts auf die Oberfläche der verwendeten Probe wird die Mitte zwischen der ersten Einstellung $\beta_2$ und der zweiten Einstellung $\beta_1$ bestimmt.

Dieses Verfahren beschreibt die eigentliche Kalibrierung der Ablenkeinheit für den Fall einer punktförmigen Pupillenbeleuchtung. Dieser Fall ist wichtig, da er in der Praxis am häufigsten auftritt. Dabei trifft das Licht auf die Probe unter einem bestimmten Winkel, der für alle Strahlen gleich groß ist. Aus den Einstellungen der Ablenkeinheit für die beiden Grenzwinkel der Totalreflexion bestimmt man deren Mitte, welche einem Einfallswinkel von 0° oder einer Nullpunkteinstellung $\beta_0$ entspricht. Mithilfe der konstruktionsbedingten Übertragungsfunktion ist dann eine absolute Winkelkalibrierung möglich.

Alternativ kann der optische Response der verwendeten Probe in einer zur Ebene der Oberfläche der verwendeten Probe konjugierten Ebene gemessen werden.

Erfindungsgemäß gibt es mehrere Verfahren zur Kalibrierung der Einstellung der Ablenkeinheit. Daraus können die Grenzwinkel der Totalreflexionen und der Berechnungsindex der Probe bestimmt werden.

Bei einer punktförmigen Objektivpupillenbeleuchtung kann demgemäß die Skala absolut kalibriert werden kann. Das bedeutet, dass eine feste Beziehung zwischen der Einstellung der Ablenkeinheit und der Absolutgröße des Einfallswinkels ermittelt wurde. Aus dem Verlauf der gemessenen Intensität ist weiterhin der Absolutwert des Grenzwinkels für die Totalreflexion $\alpha_T$, des Brechungsindexes der Probe $n_p$ und die Nullpunkteinstellung $\beta_0$ für senkrechten Einfall bestimmbar. Dafür muss bekannt sein, um wie viel die Einstellung der Ablenkeinheit verstellt werden muss, um den Einfallswinkel $\alpha$ um einen bestimmten Betrag zu ändern. Dies ist durch die konstruktionsbedingte Übertragungsfunktion bekannt. Unter dieser Voraussetzung kann der Absolutbetrag des Grenzwinkels für die Totalreflexion bestimmt werden, mit dem man den Berechnungsindex der Probe $n_p$ bestimmen kann.

Bei einer weiteren vorteilhaften Ausgestaltung des erfindungsgemäßen Verfahrens ist es besonders bevorzugt, dass für eine punktförmige Pupillenbeleuchtung unter Verwendung der Berechnungsindizes der verwendeten Probe und eines Deckglases und nach Bestimmung der Einstellungen der Grenzwinkel für Totalreflexionen den Einstellungen der Ablenkeinheit eindeutig Absolutwerte für die Einfallswinkel zugeordnet werden.

Bei einer weiteren Variante des erfindungsgemäßen Verfahrens werden für kreisringförmige Pupillenbeleuchtung unter Verwendung der Berechnungsindizes der verwendeten Probe und des Deckglases und nach Bestimmung der Einstellung des Grenzwinkels für Totalreflexion den Einstellungen der Ablenkeinheit eindeutig Absolutwerte für die Einfallswinkel zugeordnet werden.

Eine bevorzugte Ausführungsform des erfindungsgemäßen TIRF-Mikroskops weist eine in einen Abbildungsstrahlengang einschwenkbare Zusatzoptik auf zum Umschalten zwischen einer Abbildung der verwendeten Probe und einer Abbildung einer Objektivpupille auf den Detektor. Auf diese einfache Weise erreicht man, dass zwischen dem TIRF-Messbetrieb, in dem die Probe auf einen Detektor abgebildet wird, und dem TIRF-Kalibrierbetrieb, bei dem mittels der Zusatzoptik die Objektivpupille auf den Detektor abgebildet wird, umgeschaltet werden kann. Dies kann man z.B. durch eine Zusatzoptikumschaltung in einem Kameraadapter erreichen.

Besonders bevorzugt wird in dieser Ausführungsform die Kamera, welche auch im TIRF-Messbetrieb verwendet wird, als Detektor verwendet. So braucht beim Umschalten zwischen TIRF-Messbetrieb und TIRF-Kalibrierbetrieb der Detektor nicht gewechselt zu werden und es kann ein und dieselbe Kamera verwendet werden.

Alternativ kann auch ein separater Detektor zum Messen des optischen Response vorhanden sein. Unter Umständen ist es vorteilhaft im TIRF-Kalibrierbetrieb nicht dieselbe Kamera zu verwenden, welche man im TIRF-Messbetrieb verwendet, sondern einen separaten Detektor, wie zum Beispiel einen Photomultiplier oder Halbleiterdetektoren.

Das erfindungsgemäße Verfahren zum Betreiben eines TIRF-Mikroskops wird mit einem erfindungsgemäßen TIRF-Mikroskop durchgeführt. Dabei wird die Ablenkeinheit gemäß einem erfindungsgemäßen Verfahren kalibriert, der Einfallswinkel des Anregungslichts wird auf einen Wert eingestellt, der betragsmäßig größer ist als ein Grenzwinkel für die Totalreflexion und anschließend werden TIRF-Messungen durchgeführt.

Die Ablenkeinheit wird demgemäß zuerst mit dem erfindungsgemäßen Verfahren kalibriert. Dabei können die Nullpunktseinstellung $\beta_0$ der Ablenkeinheit entsprechend einem Einfallswinkel von 0° und der Absolutbetrag des Grenzwinkels für die Totalreflexion $\alpha_T$ bestimmt werden. Danach wird der Einfallswinkel des Anregungslichts auf einen Wert eingestellt, der betragsmäßig größer ist als der Grenzwinkel für Totalreflexion. In diesem Bereich bildet sich dann in der Probe hinter der Grenzschicht zwischen Deckglas und Probe ein evaneszentes Feld, welches Probenteilchen in dieser Grenzschicht anregt. In dieser Konfiguration werden dann TIRF-Messungen durchgeführt.

Da es für den Anwender wünschenswert ist, bei Totalreflexion die Eindringtiefe des evaneszenten Feldes in einem gewissen Bereich stufenlos einstellen zu können, ist es erfindungsgemäß in einer weiteren Variante vorgesehen, dass auf Grundlage der Beziehung:

$$d = \frac{\lambda}{4\pi\sqrt{n_d^2 \sin^2 \alpha - n_p^2}},$$

wobei $\lambda$ die verwendete Wellenlänge, $n_d$ der Berechnungsindex des Deckglases, $n_p$ den Berechnungsindex der Probe und $\alpha$ den Einfallswinkel von Anregungslicht auf die Probe bezeichnen, für eine gewünschte Eindringtiefe $d$ des evaneszenten Feldes der zugehörige Einfallswinkel $\alpha$ eingestellt wird. Diese Formel für die Eindringtiefe $d$ ist äquivalent der vorgenannten Beziehung für $d$. Dies kann durch einfaches Einsetzen der Gleichung $n_p = n_d \sin \alpha_T$ überprüft werden.

Falls $\alpha$ kleiner als der Grenzwinkel der Totalreflexion $\alpha_T$ ist, existiert kein evaneszentes Feld mehr. Vielmehr wird der einfallende Strahl gebrochen und breitet sich in der Probe weiter aus. Für den Grenzfall, dass der Einfallswinkel gleich dem Grenzwinkel für die Totalreflexion $\alpha_T$ ist, ergibt sich theoretisch eine unendlich große Eindringtiefe, welche jedoch für größere Einfallswinkel $\alpha$ rasch abfällt. In der Praxis liegt die Eindringtiefe d in einem Bereich von einigen 10 nm bis einigen 100 nm. Durch die oben genannte Beziehung kann der Anwender die Eindringtiefe d mit dem erfindungsgemäßen Verfahren sehr exakt einstellen, was bei TIRF-Messungen äußerst vorteilhaft ist.

In einer weiteren bevorzugten Variante des erfindungsgemäßen Verfahrens zum Betreiben eines TIRF-Mikroskops wird für eine verwendete Probe der Grenzwinkel für die Totalreflexion bestimmt und unter Verwendung des Grenzwinkels für die Totalreflexion sowie des Berechnungsindexes des Deckglases der Berechnungsindex der verwendeten Probe bestimmt.

Dieses Verfahren kann zum raschen Bestimmen des Berechnungsindexes für eine Reihe unterschiedlicher Proben verwendet werden. Da der Berechnungsindex des verwendeten Deckglases im Allgemeinen bekannt ist, kann durch den ermittelten Grenzwinkel der Totalreflexion ohne weiteres auf den Berechnungsindex der veränderten Probe geschlossen werden.

Weitere Vorteile und Merkmale der erfindungsgemäßen Verfahren und der erfindungsgemäßen Vorrichtung werden nachstehend mit Bezug auf die schematischen Figuren erläutert. Hierin zeigen:

Fig. 1     eine schematische Ansicht eines Ausführungsbeispiels eines erfindungsgemäßen TIRF-Mikroskops;

Fig. 2     eine schematische Veranschaulichung des Einfallswinkels $\alpha$ und der Grenzwinkel der Totalreflexion $\alpha_T$ an einer Grenzfläche zwischen Deckglas und Probe;

Fig. 3     eine schematische Teilansicht eines Ausführungsbeispiels, worin insbesondere die Probe mit Deckglas, Immersionsöl und Objektiv veranschaulicht ist;

Fig. 4     eine schematische Veranschaulichung der Position des Fokus des Anregungslichts in der Objektivpupille; und

Fig. 5     eine Messkurve der integralen Intensität in Abhängigkeit der Einstellung $\beta$ der Ablenkeinheit sowie eine Veranschaulichung der Lichtintensitäten in der Objektivpupille.

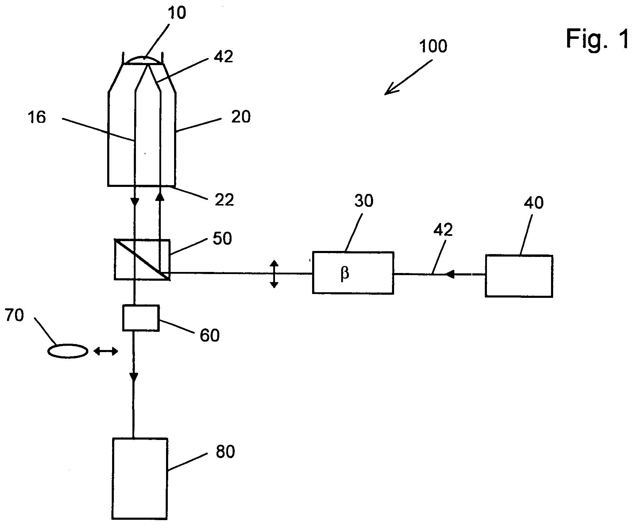

Das in Fig. 1 schematisch dargestellte erfindungsgemäße TIRF-Mikroskop 100 weist als wesentliche Komponenten eine Lichtquelle 40, eine Ablenkeinheit 30, eine Mikroskop-Optik 20, ein Reflektormodul 50 sowie eine Zusatzoptik 70 und einen Detektor 80 auf.

Das von der Lichtquelle 40 emittierte Anregungslicht 42 durchläuft zunächst die Ablenkeinheit 30, von der es in Abhängigkeit der Einstellung $\beta$ unterschiedlich stark abgelenkt wird. Das abgelenkte Anregungslicht 42 wird vom Reflektormodul 50 in Richtung einer Probe 10 umgelenkt und tritt zunächst durch die Objektivpupille 22 in die Mikroskop-Optik 20 ein, die das Anregungslicht 42 auf die Probe 10 lenkt. Ein Lichtweg in der Mikroskop-Optik 20 ist in Fig. 1 schematisch angedeutet.

Ein von der Probe 10 abgegebener optische Response, beispielsweise Fluoreszenz- und/oder Streulicht 16, verläuft symmetrisch zu einer Oberflächennormalen 18 der Probe 10 zurück durch die Mikroskop-Optik 20, verlässt diese durch die Objektivpupille 22 und trifft wiederum auf das Reflektormodul 50. Das Fluoreszenz- und/oder Streulicht 16 tritt durch das Reflektormodul 50 hindurch und wird mittels einer Abbildungsoptik 60 auf einen Detektor 80 abgebildet. In der in Fig. 1 dargestellten Konfiguration bildet die Abbildungsoptik 60 die Probe 10 scharf auf den Detektor 80 ab. In diesem Zustand können TIRF-Messungen durchgeführt werden. Wenn die Zusatzoptik 70 in den Abbildungsstrahlengang eingeschwenkt wird, wird die Objektivpupille. 22 scharf auf dem Detektor 80 abgebildet. In dieser Konfiguration kann das erfindungsgemäße TIRF-Mikroskop 100 kalibriert werden. In anderen Ausführungsformen kann die einschwenkbare Zusatzoptik 70 nicht, wie in Fig.1, hinter der Abbildungsoptik 60, sondern auch davor oder innerhalb der Abbildungsoptik 60 angeordnet sein. Es ist auch möglich, dass die Zusatzoptik 70 in einen zusätzlichen Abbildungsstrahlengang, welcher in Fig. 1 nicht dargestellt ist, eingeschwenkt werden kann.

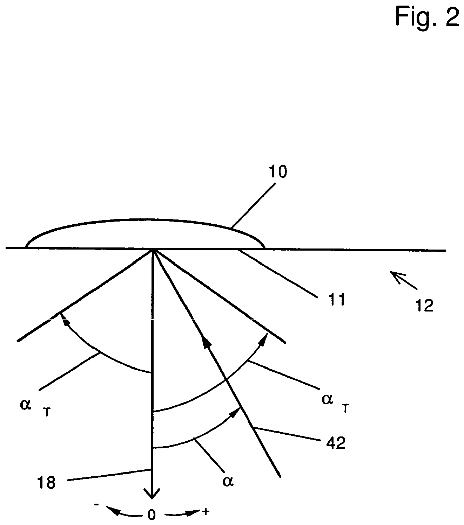

Fig. 2 veranschaulicht schematisch, wie der Einfallswinkel $\alpha$ an der Oberfläche 11 zwischen Probe 10 und Deckglas 12 gemessen wird. Ausgehend von der Oberfläche 11 zwischen Probe 10 und Deckglas 12 zeichnet man eine Oberflächennormale 18 in Richtung des Deckglases 12. Der Winkel zwischen dem einfallenden Anregungslicht 42 und der Oberflächennormalen 18 wird mit $\alpha$ bezeichnet. Hierbei werden Winkel, die in die mathematisch positive Richtung abgetragen werden, per Konvention als positive Winkel bezeichnet, Winkel, welche in die mathematisch negative Richtung abgetragen werden, als negative Winkel bezeichnet. In der Zeichnung sind außerdem die zwei Grenzwinkel der Totalreflexion $\alpha_T$ und $-\alpha_T$ eingezeichnet, welche links und rechts der Oberflächennormalen 18 im Abstand des Grenzwinkels der Totalreflexion $\alpha_T = \arcsin\left(\dfrac{n_d}{n_p}\right)$ abgetragen sind.

Im Allgemeinen ist bei einem unkalibrierten TIRF-Mikroskop für die Nullpunkteinstellung $\beta_0$ der Einfallswinkel $\alpha$ ungleich 0°, so dass zwischen den Nullpunkten der $\alpha$-Skala und der $\beta$-Skala eine Verschiebung besteht. Diese Verschiebung muss bestimmt werden,

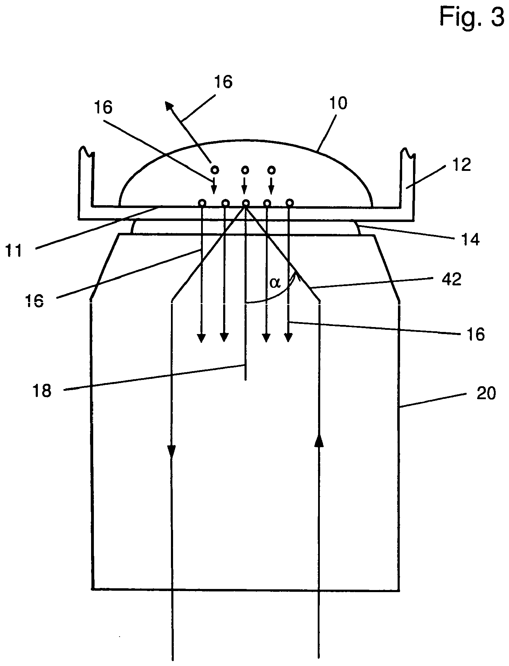

Fig. 3 veranschaulicht in weiteren Details den Strahlengang innerhalb der Mikroskop-Optik 20 sowie an der Grenzfläche 11 zwischen Probe 10 und Deckglas 12. Das vom Reflektormodul 50 kommende Anregungslicht 42 wird durch die Mikroskop-Optik 20 derart abgelenkt, dass es unter einem Einfallswinkel $\alpha$ auf die Oberfläche 11 zwischen Probe 10 und Deckglas 12 trifft.

Im Allgemeinen befinden sich in der Mikroskop-Optik 20 mehrere Linsen, an denen das Anregungslicht 42 mehrfach gebrochen wird. Diese Brechungen sind in Fig. 3 durch einen Knick schematisch dargestellt.

Nachdem das Anregungslicht 42 die Mikroskop-Optik 20 verlassen hat, tritt es in ein Immersionsöl 14 ein. In dem hier gezeigten Ausführungsbeispiel stimmt der Brechungsindex des Immersionsöls 14 mit dem Brechungsindex des Deckglases 12 überein, so dass an der Grenzfläche zwischen Immersionsöl 14 und Deckglas 12 keine Brechung erfolgt.

Wenn der Einfallswinkel $\alpha$ größer als der Totalreflexionswinkel $\alpha_T$ ist, findet an der Oberfläche 11 zwischen Deckglas 12 und Probe 10 Totalreflexion statt. Es bildet sich dann auf der Probenseite hinter der Grenzfläche 11 zwischen Deckglas 12 und Probe 10 ein evaneszentes Feld, welches typischerweise einige 10 bis einige 100 nm in die Probe 10 hineinreicht. Schematisch angedeutete Probenteilchen senden Fluoreszenzlicht 16 in alle Richtungen als optischen Response aus. Da das evaneszente Feld in der Probe 10 in Richtung der optischen Achse exponentiell abfällt, wird der größte Teil des Fluoreszenzlichts 16 von Probenteilchen abgestrahlt, welche sich in der Nähe der Grenzfläche 11 zwischen Probe 10 und Deckglas 12 befinden. Das von der Oberfläche 11 zwischen der Probe 10 und dem Deckglas 12 total reflektierte Licht verläuft symmetrisch zum einfallenden Anregungslicht 42 auf der anderen Seite der Oberflächennormalen 18 durch die Mikroskop-Optik 20 und verlässt diese durch die Objektivpupille 22 in Richtung Reflektormodul 50.

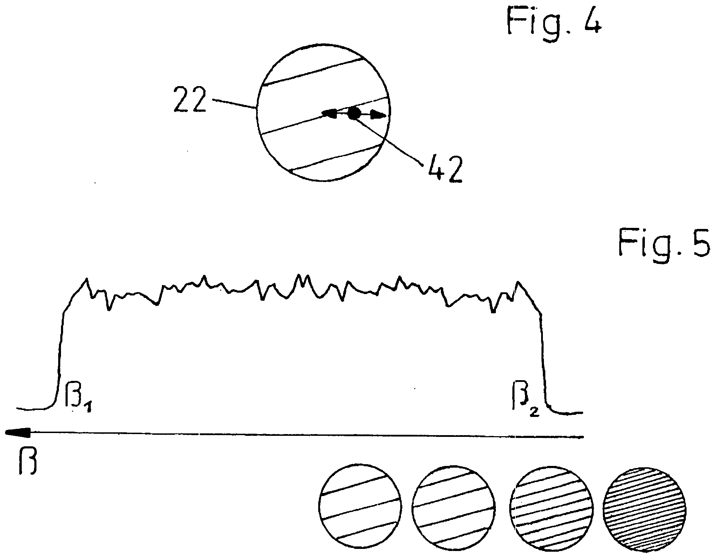

Fig. 4 verdeutlicht schematisch, wie der Fokus des Anregungslichts 42 in der Objektivpupille 22 verschoben wird. Wenn der Fokus des Anregungslichts 42 weiter entfernt vom Zentrum des Kreises der Objektivpupille 22 durch die Ebene der Objektivpupille 22 tritt, hat das einen größeren Einfallswinkel $\alpha$ an der Grenzfläche 11 zwischen Probe 10 und Deckglas 12 zur Folge.

Fig. 5 zeigt den Intensitätsverlauf der im Detektor 80 gemessenen integrierten Intensität in Abhängigkeit der Einstellung $\beta$ der Ablenkeinheit 30. Erfindungsgemäß ist in dieser Ausführungsform die Zusatzoptik 70 in den Abbildungsstrahlengang eingeschwenkt, um das erfindungsgemäße TIRF-Mikroskop kalibrieren zu können, siehe Fig.1.

In Fig. 5 unten sind Abbildungen der Objektivpupille dargestellt, welche den Positionen mit den Einstellungen $\beta$ der Ablenkeinheit 30 entsprechen. Hierbei wurde die Lichtintensität in der Objektivpupille 22 oder einer dazu konjugierten Ebene gemessen.

Die Schraffur symbolisiert die Intensität des von der Probe 10 emittierten Lichts 16.

Man erkennt zwei Flanken oder Intensitätssprünge, welche den beiden Grenzwinkeln der Totalreflexion $\alpha_T$ entsprechen. Der plateauartige Bereich zwischen den beiden Flanken entspricht den Fällen, in denen keine Totalreflexion auftritt, sondern sich das Anregungslicht 42 in der Probe 10 weiter ausbreitet. Deshalb erhält man viel Streulicht oder Fluoreszenzlicht 16 aus dem Volumen der Probe 10, was zu einer höheren Intensität in der Objektivpupille 20 oder einer dazu konjugierten Ebene führt.

Wenn man sich dem Grenzwinkel der Totalreflexion $\alpha_T$ aus diesem Bereich kommend nähert, nimmt die integrierte Intensität stark ab und erreicht bei Überschreiten des Grenzwinkels der Totalreflexion einen Minimalwert. Dies ist in den äußeren Bereichen des Graphs erkennbar.

Bei Erreichen und Überschreiten des Grenzwinkels der Totalreflexion $\alpha_T$ bildet sich hinter der Oberfläche 11 in der Probe 10 ein evaneszentes Feld, dessen Eindringtiefe d in Abhängigkeit des Ablenkwinkels $\alpha$ sehr schnell abfällt. Dies spiegelt sich in den Abbildungen der Objektivpupille am unteren Rand der Fig. 5 wieder. Da nunmehr nur noch wenige Probenteilchen Licht emittieren können, ist hier die integrale Intensität im Vergleich zum Fall, bei dem noch keine Totalreflexion aufgetreten ist, sehr viel niedriger.

Aus der Position der beiden Flanken kann die Einstellung $\beta_0$ der Ablenkeinheit, welche einem Probenbeleuchtungswinkel $\alpha$ von 0° entspricht, berechnet werden. Diese ergibt sich zu:

$$\beta_0(\alpha = 0°) = \frac{\beta_1 + \beta_2}{2} .$$

Hierbei sind $\beta_1$ und $\beta_2$ die Einstellungen der Ablenkeinheit 30, die den Grenzwinkeln der Totalreflexion $\alpha_T$ entsprechen. Zur korrekten Berechung von $\beta_0$ sind die Vorzeichen der Winkel $\beta_1$ und $\beta_2$ entsprechend zu beachten.

Hiervon ausgehend können definierte Einfallswinkel eingestellt werden, da der Einfallswinkel $\alpha$ und die Einstellung $\beta$ der Ablenkeinheit 30 durch den optischen und mechanischen Aufbau in einer festen funktionalen Beziehung zueinander stehen:

$$\alpha = f(\beta - \beta_0), \qquad \beta = \beta_0 + f^{1}(\alpha),$$

wobei f eine Funktion und $f^{-1}$ eine dazugehörige Umkehrfunktion beschreibt. Da in typischen Situationen die Funktion f bekannt ist, muss lediglich eine Konstante, im vorliegenden Fall z.B. $\beta_0$, bestimmt werden, um eine absolute Kalibrierung der Ablenkeinheit 30 zu erreichen.

Falls darüber hinaus in der jeweiligen Konstellation die Absolutgröße des Grenzwinkels $\alpha_T$ berechnet werden kann, so kann auch die Einstellung $\beta$ der Ablenkeinheit 30 absolut kalibriert werden. Das heißt, dass jedem Wert $\beta$ der Ablenkeinheit 30 ein Absolutwert $\alpha$ zugeordnet werden kann. In diesem Fall lässt sich weiterhin aus einem der beiden Grenzwinkel $\alpha_T$ der Brechungsindex der Probe $n_p$ berechnen.

Für den Fall, dass sich der Fluoreszenzfiltersatz im Beleuchtungsstrahlengang befindet, sollte eine Kalibrierung der Ablenkeinrichtung 30 für jede Kombination aus Objektiv 20 und Fluoreszenzfiltersatz durchgeführt werden, da jedes dieser Einzelteile unterschiedliche Maßabweichungen hat.

Bei kreisringförmiger Pupillenbeleuchtung muss beachtet werden, dass hierbei nur eine Intensitätskante zur Verfügung steht. In diesem Fall muss die Orientierung des kreisringförmigen Anregungslichts 42 bezüglich der optischen Achse möglichst gut zentriert sein, da andernfalls nicht an allen Stellen des Kreisringes derselbe Einfallswinkel $\alpha$ bestehen würde. Unter Voraussetzung einer guten Justage und wenn die Streckung der Skala kalibriert ist, kann der Absolutbetrag des Grenzwinkels $\alpha_T$ der Totalreflexion bestimmt werden. Falls zusätzlich der Brechungsindex der Probe 10 bekannt ist, kann hier ebenfalls eine Absolutkalibrierung der Ablenkeinheit 30 vorgenommen werden.

Mit der vorliegenden Erfindung wird ein neuartiges Verfahren zum Kalibrieren einer Ablenkeinheit in einem TIRF-Mikroskop, ein entsprechendes TIRF-Mikroskop sowie ein Verfahren zum Betreiben eines solchen TIRF-Mikroskops bereitgestellt, mit welchen mit minimalen zusätzlichen Hardwareaufwand eine äußerst genaue Kalibrierung eines TIRF-Mikroskops sowie eine genaue Bestimmung eines Grenzwinkels für die Totalreflexion durchgeführt werden können. Dies kann im Vergleich zum Stand der Technik mit einem reduzierten apparativen Aufwand bewerkstelligt werden.

**Patentansprüche**

1.  Verfahren zum Kalibrieren einer Ablenkeinheit (30) in einem TIRF-Mikroskop (100), mit welcher ein Einfallswinkel ($\alpha$) von Anregungslicht (42) auf eine Probe (10) verstellt wird,

    (a) bei dem eine Einstellung ($\beta$) der Ablenkeinheit (30) so gewählt wird, dass der zugehörige Einfallswinkel ($\alpha$) sicher größer ist oder sicher kleiner ist als ein erwarteter Grenzwinkel ($\alpha_T$) für die Totalreflexion des Anregungslichts (42) an einer Oberfläche einer verwendeten Probe (10),
    (b) bei dem der Einfallswinkel ($\alpha$) durch Ändern der Einstellung ($\beta$) der Ablenkeinheit (30) in Richtung eines erwarteten Grenzwinkels ($\alpha_T$) gescannt wird, wobei für jede Einstellung ($\beta$) der Ablenkeinheit (30) eine Intensität von durch das Anregungslicht (42) bewirktem Fluoreszenzlicht der verwendeten Probe (10) gemessen wird,
    (c) bei dem die Intensität des Fluoreszenzlichts der verwendeten Probe (10) mindestens für so viele Einstellungen ($\beta$) der Ablenkeinheit (30) gemessen wird, bis die Intensität des Fluoreszenzlichts der verwendeten Probe (10) eine Flanke durchläuft,
    (d) bei dem die zu der Flanke gehörende Einstellung ($\beta_1$, $\beta_2$) der Ablenkeinheit (30) als Einstellung für den Grenzwinkel ($\alpha_T$) für Totalreflexion an der verwendeten Probe (10) gespeichert wird.

2.  Verfahren nach Anspruch 1,
    **dadurch gekennzeichnet,**
    **dass** der optische Response (16) der verwendeten Probe (10) in einer zur Ebene einer Objektivpupille (22) konjugierten Ebene gemessen wird.

3.  Verfahren nach Anspruch 1 oder 2,
    **dadurch gekennzeichnet,**
    **dass** der optische Response (16) mit einem Detektor (80) gemessen wird.

4.  Verfahren nach einem der Ansprüche 1 bis 3,
    **dadurch gekennzeichnet,**
    **dass** der optische Response (16) mit einer Kamera gemessen wird.

5.  Verfahren nach Anspruch 4,
    **dadurch gekennzeichnet,**
    **dass** der optische Response (16) mit einer im TIRF-Messbetrieb verwendeten Kamera gemessen wird.

6.  Verfahren nach Anspruch 4 oder 5,
    **dadurch gekennzeichnet,**
    **dass** zur Auswertung der Intensität nur Teilbereiche eines Kameradetektors benutzt werden.

7.  Verfahren nach einem der Ansprüche 1 bis 6,
    **dadurch gekennzeichnet,**
    **dass** zur Beschleunigung der Kalibrierung der Einfallswinkel ($\alpha$) nur in einer Umgebung der erwarteten Grenzwinkel ($\alpha_T$) oder eines erwarteten Grenzwinkels ($\alpha_T$) gescannt wird.

8.  Verfahren nach einem der Ansprüche 4 bis 7,
    **dadurch gekennzeichnet,**
    **dass** die Kamera zur Beschleunigung der Kalibrierung mit einer reduzierten Auflösung betrieben wird.

9.  Verfahren nach einem der Ansprüche 1 bis 8,
    **dadurch gekennzeichnet,**
    **dass** für eine punktförmige Pupillenbeleuchtung eine erste Einstellung ($\beta_1$) der Ablenkeinheit (30) für einen positiven Grenzwinkel ($\alpha_T$) für die Totalreflexion und eine zweite Einstellung ($\beta_2$) der Ablenkein-

heit (30) für einen negativen Grenzwinkel ($\alpha_2$) für die Totalreflexion bestimmt werden und

**dass** als Einstellung ($\beta_0$) der Ablenkeinheit (30) für senkrechten Einfall des Anregungslichts (42) auf die Oberfläche (11) der verwendeten Probe (10) die Mitte zwischen der ersten Einstellung ($\beta_1$) und der zweiten Einstellung ($\beta_2$) bestimmt wird.

10. Verfahren nach Anspruch 1 bis 9,
**dadurch gekennzeichnet,**
**dass** der optische Response (16) der verwendeten Probe (10) in einer zur Ebene der Oberfläche (11) der verwendeten Probe (10) konjugierten Ebene gemessen wird.

11. Verfahren nach einem der Ansprüche 1 bis 10,
**dadurch gekennzeichnet,**
**dass** außerdem Streulicht der verwendeten Probe (10) gemessen wird.

12. Verfahren nach einem der Ansprüche 1 bis 11,
**dadurch gekennzeichnet,**
**dass** für eine punktförmige Pupillenbeleuchtung unter Verwendung der Brechungsindizes der verwendeten Probe (10) und eines Deckglases (12) und nach Bestimmung der Einstellungen ($\beta_1, \beta_2$) der Grenzwinkel ($\alpha_T$) für Totalreflexion den Einstellungen ($\beta$) der Ablenkeinheit (30) eindeutig Absolutwerte für die Einfallswinkel ($\alpha$) zugeordnet werden.

13. Verfahren nach einem der Ansprüche 1 bis 12,
**dadurch gekennzeichnet,**
**dass** für eine kreisringförmige Pupillenbeleuchtung unter Verwendung der Brechungsindizes der verwendeten Probe (10) und des Deckglases (12) und nach Bestimmung der Einstellung des Grenzwinkels ($\alpha_T$) für Totalreflexion den Einstellungen ($\beta$) der Ablenkeinheit (30) eindeutig Absolutwerte für die Einfallswinkel ($\alpha$) zugeordnet werden.

14. TIRF-Mikroskop zur Durchführung eines Verfahrens nach einem der Ansprüche 1 bis 13, mit

    a) einer Lichtquelle (40) zum Aussenden des Anregungslichts (42),
    b) einer Mikroskop-Optik (20) zum Leiten des Anregungslichts (42) auf die verwendete Probe (10),
    c) der Ablenkeinheit (30) zum Einstellen des Einfallswinkels ($\alpha$) des Anregungslichts (42) auf die Oberfläche (11) der verwendeten Probe (10),
    d) mit einem Detektor (80) zum Nachweisen des Fluoreszenzlichts der verwendeten Probe (10) und
    e) einer in einen Abbildungsstrahlengang einschwenkbaren Zusatzoptik (70) zum Umschalten zwischen einer Abbildung der verwendeten Probe (10) und einer Abbildung einer Objektivpupille (22) auf den Detektor (80) und/oder einem separaten Detektor zum Messen des Fluoreszenzlichts.

15. TIRF-Mikroskop nach Anspruch 14,
**dadurch gekennzeichnet,**
**dass** der Detektor (80) eine im TIRF-Messbetrieb verwendete Kamera ist.

16. Verfahren zum Betreiben eines TIRF-Mikroskops nach einem der Ansprüche 14 oder 15,
**dadurch gekennzeichnet,**
**dass** die Ablenkeinheit (30) gemäß dem Verfahren nach einem der Ansprüche 1 bis 13 kalibriert wird,
**dass** der Einfallswinkel ($\alpha$) des Anregungslichts (42) auf einen Wert eingestellt wird, der betragsmäßig größer ist als ein Grenzwinkel ($\alpha_T$) für die Totalreflexion und
**dass** anschließend TIRF-Messungen durchgeführt werden.

17. Verfahren nach Anspruch 16,
**dadurch gekennzeichnet,**
**dass** auf Grundlage der Beziehung:

$$d = \frac{\lambda}{4\pi \cdot n_d \sqrt{\sin^2 \alpha - \sin^2 \alpha_T}},$$

wobei $\lambda$ die verwendete Wellenlänge, $n_d$ den Brechungsindex des Deckglases (12), $\alpha$ den Einfallswinkel ($\alpha$) von Anregungslicht (42) auf die Probe (10) und $\alpha_T$ den Grenzwinkel ($\alpha_T$) für die Totalreflexion bezeichnen, für eine gewünschte Eindringtiefe d eines evaneszenten Felds in die verwendete Probe (10) der zugehörige Einfallswinkel ($\alpha$) eingestellt wird.

18. Verfahren nach Anspruch 16 oder 17,
**dadurch gekennzeichnet,**
**dass** unter Verwendung des Grenzwinkels ($\alpha_T$) für die Totalreflexion und des Brechungsindexes des Deckglases (12) der Brechungsindex der verwendeten Probe (10) bestimmt wird.

**Claims**

1. A method for calibrating a deflection unit (30) in a TIRF microscope (100), with which an angle of incidence ($\alpha$) of excitation light (42) onto a specimen (10) is adjusted, wherein

    (a) a setting ($\beta$) of said deflection unit (30) is adjusted such that the pertaining angle of incidence ($\alpha$) is definitely greater or definitely smaller than an anticipated critical angle ($\alpha_T$) for total

reflection of the excitation light (42) on a surface of a specimen used (10),

(b) the angle of incidence ($\alpha$) is scanned by varying the setting (b) of said deflection unit (30) in the direction of an anticipated critical angle ($\alpha_T$), an intensity of the fluorescent light of the used specimen (10) elicited by the excitation light (42) being measured for each setting ($\beta$) of said deflection unit (30),

(c) the intensity of the fluorescent light of the specimen used (10) is measured at least for so many settings ($\beta$) of said deflection unit (30) until the intensity of the fluorescent light of the specimen used (10) traverses a flank,

(d) the setting ($\beta_1$, $\beta_2$) of said deflection unit (30) pertaining to the flank is stored as the setting for the critical angle ($\alpha_T$) for total reflection at the specimen used (10).

2. The method as defined in claim 1,
**characterized in that**
said optical response (16) of the specimen used (10) is measured in a plane conjugated to the plane of an objective pupil (22).

3. The method as defined in claim 1 or 2,
**characterized in that**
said optical response (16) is measured with a detector (80).

4. The method as defined in any one of claims 1 to 3,
**characterized in that**
said optical response (16) is measured with a camera.

5. The method as defined in claim 4,
**characterized in that**
said optical response (16) is measured with a camera used in the TIRF measuring mode.

6. The method as defined in claim 4 or 5,
**characterized in that**
for evaluation of the intensity only subregions of a camera detector are used.

7. The method as defined in any one of claims 1 to 6,
**characterized in that**
for acceleration of the calibration of the angle of incidence ($\alpha$) scanning is effected only in the vicinity of the anticipated critical angles ($\alpha_T$) or of an anticipated critical angle ($\alpha_T$).

8. The method as defined in any one of claims 4 to 7,
**characterized in that**
for acceleration of the calibration said camera is operated at a reduced resolution.

9. The method as defined in any one of claims 1 to 8,

**characterized in that**
to achieve a punctiform pupil illumination, a first setting ($\beta_1$) of said deflection unit (30) is determined for a positive critical angle ($\alpha_T$) for the total reflection and a second setting ($\beta_2$) of said deflection unit (30) is determined for a negative critical angle ($\alpha_T$) for the total reflection and
that the setting ($\beta_0$) of said deflection unit (30) for vertical incidence of the excitation light (42) onto the surface (11) of the specimen used (10), is defined as the midpoint between said first setting ($\beta_1$) and said second setting ($\beta_2$).

10. The method as defined in claim from 1 to 9,
**characterized in that**
said optical response (16) of the specimen used (10) is measured in a plane conjugated to the plane of the surface (11) of the specimen used (10).

11. The method as defined in any one of claims 1 to 10,
**characterized in that**
in addition the scattered light of the specimen used (10) is measured.

12. The method as defined in any one of claims 1 to 11,
**characterized in that**
to achieve a punctiform pupil illumination using the refractive indices of the specimen used (10) and of a cover glass (12) and following determination of the settings ($\beta_1$, $\beta_2$) of the critical angle ($\alpha_T$) for total reflection, unique absolute values for the angle of incidence ($\alpha$) are assigned to the settings ($\beta$) of said deflection unit (30).

13. The method as defined in any one of claims 1 to 12,
**characterized in that**
to achieve a circularly annular pupil illumination utilizing the refractive indices of the specimen used (10) and of the cover glass (12) and following determination of the setting of the critical angle ($\alpha_T$) for total reflection, unique absolute values for the angle of incidence ($\alpha$) are assigned to the settings ($\beta$) of said deflection unit (30).

14. A TIRF microscope for carrying out a process as defined in any one of claims 1 to 13, comprising

a) a light source (40) for the emission of excitation light (42),
b) microscope optics (20) for guiding the excitation light (42) onto the specimen used (10),
c) the deflection unit (30) for the adjustment of the angle of incidence ($\alpha$) of the excitation light (42) on the surface (11) of the specimen used (10),
d) a detector (80) for detecting the fluorescent light of the specimen used (10) and
e) a supplementary optics (70) which is capable of being revolved into an optical imaging path for the purpose of switching between an imaging of the specimen used (10) and an imaging of an objective pupil (22) on the detector (80) and / or a separate detector for measuring the fluorescent light.

15. The TIRF microscope as defined in claim 14, **characterized in that** said detector (80) is a camera used in the TIRF measuring mode.

16. A method for operating a TIRF microscope as defined in any one of claims 14 or 15, **characterized in that** the deflection unit (30) is calibrated by the method defined in any one of claims 1 to 13, that the angle of incidence ($\alpha$) of said excitation light (42) is adjusted to a value, the magnitude of which is greater than a critical angle ($\alpha_T$) for the total reflection, and that TIRF measurements are then carried out.

17. The method as defined in claim 16, **characterized in that** on the basis of the relationship:

$$d = \frac{\lambda}{4\pi \cdot n_d \sqrt{\sin^2 \alpha - \sin^2 \alpha_T}}$$

in which

$\lambda$ denotes the wavelength used,
$n_d$ denotes the refractive index of the cover glass (12),
$\alpha$ is the angle of incidence of the excitation light (42) on the specimen (10) and
$\alpha_T$ is the critical angle for total reflection, the associated angle of incidence ($\alpha$) is adjusted to reach a desired depth of penetration d of an evanescent field in the specimen used (10).

18. The method as defined in claim 16 or 17, **characterized in that** the refractive index of the specimen used (10) is determined by utilizing the critical angle ($\alpha_T$) for total reflection and the refractive index of the cover glass (12).

**Revendications**

1. Procédé pour étalonner une unité de déviation (30) dans un microscope TIRF (100), à l'aide de laquelle un angle d'incidence ($\alpha$) de lumière d'excitation (42) sur un échantillon (10) est ajusté,

(a) dans lequel un réglage ($\beta$) de l'unité de déviation (30) est choisi de telle sorte que l'angle d'incidence ($\alpha$) associé est avec certitude plus grand ou plus petit qu'un angle limite ($\alpha_T$) attendu pour la réflexion totale de la lumière d'excitation (42) au niveau d'une surface d'un échantillon (10) utilisé,
(b) dans lequel l'angle d'incidence ($\alpha$) est balayé par modification du réglage ($\beta$) de l'unité de déviation (30) en direction d'un angle limite ($\alpha_T$) attendu, une intensité de lumière fluorescente de l'échantillon (10) utilisé, provoquée par la lumière d'excitation (42), étant mesurée pour chaque réglage ($\beta$) de l'unité de déviation (30),
(c) dans lequel l'intensité de la lumière fluorescente de l'échantillon (10) utilisé est mesurée au moins pour autant de réglages ($\beta$) de l'unité de déviation (30) jusqu'à ce que l'intensité de la lumière fluorescente de l'échantillon utilisé (10) traverse un flanc,
(d) dans lequel le réglage ($\beta_1$, $\beta_2$) associé au flanc de l'unité de déviation (30) est mémorisé en tant que réglage pour l'angle limite ($\alpha_T$) pour la réflexion totale au niveau de l'échantillon (10) utilisé.

2. Procédé selon la revendication 1, **caractérisé en ce que** la réponse (16) optique de l'échantillon (10) utilisé est mesurée dans un plan combiné au plan d'une pupille d'objectif (22).

3. Procédé selon la revendication 1 ou 2, **caractérisé en ce que** la réponse (16) optique est mesurée avec un détecteur (80).

4. Procédé selon l'une des revendications 1 à 3, **caractérisé en ce que** la réponse (16) optique est mesurée avec une caméra.

5. Procédé selon la revendication 4, **caractérisé en ce que** la réponse (16) optique est mesurée avec une caméra utilisée lors du mode de mesure TIRF.

6. Procédé selon la revendication 4 ou 5, **caractérisé en ce que** seules des zones partielles d'un détecteur de caméra sont employées pour évaluer l'intensité.

7. Procédé selon l'une des revendications 1 à 6, **caractérisé en ce que** l'angle d'incidence ($\alpha$) est balayé seulement dans un environnement de l'angle limite ($\alpha_T$) attendu ou d'un angle limite ($\alpha_T$) attendu afin d'accélérer l'étalonnage.

**8.** Procédé selon l'une des revendications 4 à 7, **caractérisé en ce**
**que** la caméra fonctionne à une résolution réduite afin d'accélérer l'étalonnage.

**9.** Procédé selon l'une des revendications 1 à 8, **caractérisé en ce**
**que** sont définis, pour un éclairage de pupille ponctuel, un premier réglage ($\beta_1$) de l'unité de déviation (30) pour un angle limite ($\alpha_T$) positif pour la réflexion totale et un deuxième réglage ($\beta_2$) de l'unité de déviation (30) pour un angle limite ($\alpha_2$) négatif pour la réflexion totale, et
**que** la moyenne entre le premier réglage ($\beta_1$) et le deuxième réglage ($\beta_2$) est définie en tant que réglage ($\beta_0$) de l'unité de déviation (30) pour une incidence perpendiculaire de la lumière d'excitation (42) sur la surface (11) de l'échantillon (10) utilisé.

**10.** Procédé selon la revendication 1 à 9, **caractérisé en ce**
**que** la réponse (16) optique de l'échantillon (10) utilisé est mesurée dans un plan combiné au plan de la surface (11) de l'échantillon (10) utilisé.

**11.** Procédé selon l'une des revendications 1 à 10, **caractérisé en ce**
**que** par ailleurs une lumière diffusée de l'échantillon (10) utilisé est mesurée.

**12.** Procédé selon l'une des revendications 1 à 11, **caractérisé en ce**
**que** des valeurs absolues pour les angles d'incidence ($\alpha$) sont associées clairement aux réglages ($\beta$) de l'unité de déviation (30) pour un éclairage de pupille ponctuel en utilisant l'indice de réfraction de l'échantillon (10) utilisé et un cache en verre (12) et après la définition des réglages ($\beta_1$, $\beta_2$) des angles limites ($\alpha_T$) pour une réflexion totale.

**13.** Procédé selon l'une des revendications 1 à 12, **caractérisé en ce**
**que** des valeurs absolues pour les angles d'incidence ($\alpha$) sont associées clairement aux réglages ($\beta$) de l'unité de déviation (30) pour un éclairage de pupille en forme d'anneau circulaire en utilisant l'indice de réfraction de l'échantillon (10) utilisé et le cache en verre (12) et après la définition du réglage de l'angle limite ($\alpha_T$) pour une réflexion totale.

**14.** Microscope TIRF servant à mettre en oeuvre un procédé selon l'une des revendications 1 à 13, comprenant

a) une source de lumière (40) pour envoyer la lumière d'excitation (42),
b) une optique de microscope (20) pour conduire la lumière d'excitation (42) sur l'échantillon (10) utilisé,
c) l'unité de déviation (30) pour régler l'angle d'incidence ($\alpha$) de la lumière d'excitation (42) sur la surface (11) de l'échantillon (10) utilisé,
d) un détecteur (80) pour prouver la présence de la lumière fluorescente de l'échantillon (10) utilisé, et
e) une optique supplémentaire (70) pouvant être introduite par pivotement dans un chemin optique de reproduction, pour la commutation entre une reproduction de l'échantillon (10) utilisé et une reproduction d'une pupille d'objectif (22) sur le détecteur (80) et/ou un détecteur séparé pour mesurer la lumière fluorescente.

**15.** Microscope TIRF selon la revendication 14, **caractérisé en ce**
**que** le détecteur (80) est une caméra utilisée lors du mode de mesure TIRF.

**16.** Procédé servant à faire fonctionner un microscope TIRF selon l'une des revendications 14 ou 15, **caractérisé en ce**
**que** l'unité de déviation (30) est étalonnée selon le procédé selon l'une des revendications 1 à 13,
**que** l'angle d'incidence ($\alpha$) de la lumière d'excitation (42) est réglé sur une valeur, qui est plus grande en valeur qu'un angle limite ($\alpha_T$) pour la réflexion totale, et que des mesures TIRF sont mises en oeuvre immédiatement après.

**17.** Procédé selon la revendication 16, **caractérisé en ce**
**qu'**est réglé pour une profondeur de pénétration d d'un champ évanescent dans l'échantillon (10) utilisé, l'angle d'incidence ($\alpha_T$) associé sur la base de l'équation :

$$d = \frac{\lambda}{4\pi \cdot n_d \sqrt{\sin^2 \alpha - \sin^2 \alpha_T}},$$

$\lambda$ désignant la longueur d'onde utilisée, $n_d$ l'indice de réfraction du cache en verre (12), $\alpha$ l'angle d'incidence ($\alpha$) de la lumière d'excitation (42) sur l'échantillon (10) et $\alpha_T$ l'angle limite ($\alpha_T$) pour la réflexion totale.

**18.** Procédé selon la revendication 16 ou 17, **caractérisé en ce**
**que** l'indice de réfraction de l'échantillon (10) utilisé est défini en utilisant l'angle limite ($\alpha_T$) pour la réflexion totale et l'indice de réfraction du cache en verre (12).

Fig. 1

Fig. 2

Fig. 3

Fig. 4

Fig. 5

EP 2 271 961 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006021996 A1
- US 20040001253 A1

- WO 2006048683 A1
- EP 1524491 A1

**In der Beschreibung aufgeführte Nicht-Patentliteratur**

- Observing Secretory Granules with a Multiangle Evanescent Wave Microscope. *Biophysical Journal,* vol. 78, 2641-2654
- **A. ROHRBACH.** Total internal reflection fluorescence. *Ann. Rev. Biophys. Bioeng.,* 1984, vol. 13, 247-68

- **D. AXELROD et al.** Surface Plasmon Resonance Imaging Using a High Numerical Aperture Microscope Objective. *Anal. Chem.,* 2007, vol. 79, 2979-2983
- **BO HUANG et al.** Non-linear evanescent-field imaging. *J. Phys. D: Appl. Phys.,* 2005, vol. 38, R185-R197